# FASCICULE DE BREVET EUROPEEN

(11) **EP 1 352 708 B1**
(45) Date de publication et mention de la délivrance du brevet: **28.03.2007**
(21) Numéro de dépôt: 03290886.5
(22) Date de dépôt: 09.04.2003
(51) Int. Cl.: B24B 9/14, B24B 47/22, B24B 49/12, B24B 17/06

(54) **Procédé et machine pour meuler une lentille ophtalmique comportant une étape de relevé sans contact**
Verfahren und Maschine zum Schleifen einer Brillenglaslinse mit berührungsloser Vermessung
Method and apparatus for polishing an eyeglass lens comprising non-contacting measurement

(30) Priorité: 12.04.2002 FR 0204623
(43) Date de publication de la demande: 15.10.2003
(73) Titulaire: ESSILOR INTERNATIONAL (Compagnie Générale d'Optique), F-94220 Charenton-le-Pont (FR)
(72) Inventeur: Guillermin, Laurent, 75011 Paris (FR); Millet, Sylvaine, 95230 Soisy sous Montmorency (FR)
(74) Mandataire: Quantin, Bruno Marie Henri

(56) Documents cités:
- EP-A- 0 196 114
- EP-A- 1 250 979
- DE-A- 3 827 122
- DE-A- 19 804 542
- FR-A- 2 543 039
- FR-A- 2 734 505
- US-A- 6 122 063
- US-A1- 2002 041 357

## Description

L'invention a trait au meulage des lentilles ophtalmiques selon le préambule de la revendication 1 et se réfère aussi à une machine pour meuler des lentilles selon le préambule de la revendication 25. Une machine et un procédé telles que décrites dans le préambule des revendications 1 et 25 sont connues de l'art antérieur, par exemple par le document FR-A-2543039.

Elle concerne plus particulièrement un procédé pour meuler par sa tranche une lentille ophtalmique suivant un contour prédéterminé correspondant à celui d'un cercle de monture de lunettes dans lequel le verre est destiné à être monté, procédé suivant lequel on relève le profil d'au moins l'une des faces de la lentille au droit dudit contour prédéterminé à former, puis on amène la lentille, entraînée en rotation, en contact par sa tranche avec un outil de meulage.

Avant de procéder au meulage de la lentille, il est souvent souhaitable de connaître le profil d'au moins l'une de ses faces au droit du contour à former, afin qu'au cours du meulage il soit possible de piloter le positionnement relatif de la lentille par rapport à l'outil de meulage en sorte que la partie utile de ce dernier se trouve systématiquement à l'aplomb de la tranche de la lentille, et notamment à l'aplomb d'une zone prédéterminée sur la tranche de la lentille.

Généralement, le contour à former est connu - et mémorisé - au préalable au moyen d'un relevé effectué à même le cercle de monture.

On connaît déjà des procédés du type prémentionné, suivant lesquels l'étape de relevé est effectuée au moyen d'un palpeur mécanique venant au contact de la lentille en rotation, au droit du contour à former.

Un dispositif de rappel élastique permet de maintenir le palpeur en contact avec la lentille pendant au moins une révolution complète de celle-ci.

La face de la lentille avec laquelle le palpeur est en contact étant rarement à symétrie de révolution, il se produit pendant la rotation de la lentille une translation du palpeur dont on peut déduire, en connaissant à chaque instant la position angulaire de la lentille autour de son axe de rotation, la forme tridimensionnelle du profil relevé.

Pour avoir une connaissance plus approfondie d'un tel procédé, l'on pourra se reporter à la demande de brevet français déposée par la demanderesse et publiée sous le numéro FR-A-2 543 039.

Ce procédé, et la machine pour le mettre en oeuvre, ont donné jusqu'à ce jour entière satisfaction.

Toutefois, si l'on tient compte des exigences toujours plus poussées des porteurs et, par voie de conséquence, des opticiens qui souhaitent bien entendu les satisfaire, l'on doit admettre que ce procédé, et donc cette machine, présentent un certain nombre d'inconvénients, énumérés ci-après.

L'effort mécanique appliqué par le palpeur sur la lentille engendre sur cette dernière des contraintes et déformations qui peuvent impliquer des erreurs de mesure lors du relevé du profil.

Le frottement engendré par le glissement du palpeur sur la lentille lors de sa rotation peut engendrer sur la face concernée de celle-ci des rayures inesthétiques.

Ce même frottement provoque une usure chronique du palpeur, ce qui, d'une part, entraîne des erreurs de mesure lors du relevé et, d'autre part, impose un remplacement fréquent du palpeur.

Compte tenu du rayon de courbure de la face concernée de la lentille et, de ce fait, de l'inclinaison de cette face par rapport à l'axe de translation du palpeur, la réaction de la lentille appliquée au palpeur possède une composante perpendiculaire à cet axe, ce qui peut conduire à un fléchissement ou, tout du moins, à un désaxage du palpeur et, ainsi, induire non seulement une erreur de mesure, mais également un endommagement du palpeur.

Lorsque le profil à relever est, au moins localement, proche de la tranche de la lentille brute, l'emploi du palpeur est risqué puisqu'il tend à glisser vers l'extérieur de la lentille où il ne peut qu'être endommagé lors de la rotation de celle-ci.

L'environnement agressif d'usinage, où se mêlent eau et copeaux de meulage, provoque une usure accélérée du palpeur qui, par ailleurs, est un ensemble mécanique dont la réalisation est délicate et coûteuse.

Afin de préserver le palpeur, il est courant de réduire la vitesse de rotation de la lentille au cours du relevé du profil, ce qui augmente le temps de cycle et grève ainsi la productivité.

L'invention vise à résoudre notamment les inconvénients précités, en fournissant un procédé et une machine de meulage permettant de relever le profil de manière à la fois sûre, fiable, précise et durable.

A cet effet, l'invention propose un procédé pour meuler par sa tranche une lentille ophtalmique présentant une face dite avant et une face dite arrière opposées, suivant un contour prédéterminé correspondant à celui d'un cercle de monture de lunettes dans lequel la lentille est destinée à être montée, ledit contour étant délimité en face avant par un bord dit avant et en face arrière par un bord dit arrière, procédé comportant une étape de relevé suivant laquelle on relève la forme tridimensionnelle d'au moins l'un des bords avant ou arrière ; dans l'étape de relevé, on balaye sur la face éclairée de la lentille ledit bord au moyen d'un faisceau lumineux formant sur ladite face une tache lumineuse, on relève simultanément, sur des moyens de réception optique pointés vers ladite tache lumineuse, les positions successives d'une image de ladite tache lumineuse, et on déduit des relevés effectués la forme tridimensionnelle dudit bord ; il est en outre prévu une étape d'usinage suivant laquelle on amène la lentille, entraînée en rotation, en contact par sa tranche avec un outil de meulage, et on pilote le positionnement relatif de la lentille et de l'outil en fonction du ou desdits relevés.

Selon un deuxième aspect, l'invention propose une machine pour meuler par sa tranche une lentille ophtalmique présentant une face dite avant et une face dite arrière opposées, suivant un contour prédéterminé correspondant à celui d'un cercle de monture de lunettes dans lequel la lentille est destinée à être montée, ce contour à former étant délimité en face avant par un bord dit avant et en face arrière par un bord dit arrière, la machine comportant un support rotatif pour le montage de la lentille, un outil de meulage rotatif, des moyens pour déplacer l'un par rapport à l'autre le support et l'outil suivant une direction parallèle à l'axe de rotation du support, des moyens pour déplacer le support et l'outil l'un par rapport à l'autre suivant une direction perpendiculaire à l'axe du support, une unité de pilotage adaptée à commander lesdits moyens de déplacement, la machine comportant en outre au moins un dispositif de mesure optique comprenant une source lumineuse produisant un faisceau lumineux dirigé vers l'une des faces de la lentille pour y former une tache lumineuse, des moyens de réception optique pointés vers ladite tache lumineuse et reliés à ladite unité de pilotage, celle-ci comportant des moyens de calcul adaptés à calculer la forme tridimensionnelle de l'un au moins des bords en fonction des relevés effectués sur les moyens de réception optique.

Le relevé du profil étant effectué sans contact, la lentille est préservée de toute contrainte et déformation. Les rayures à sa surface sont évitées. Le positionnement relatif de la lentille et du dispositif permettant le relevé du profil est précis et invariable, au bénéfice de la précision des mesures.

Il est possible de diminuer le temps de cycle, c'est-à-dire d'augmenter la vitesse de rotation de la lentille pendant l'étape de relevé, sans incidence sur la précision des mesures, d'où une productivité accrue.

Si besoin est, dans l'étape de relevé, on relève à la fois la forme tridimensionnelle du bord avant et celle du bord arrière, en balayant chaque bord, au moyen de deux faisceaux lumineux formant respectivement sur chacune des faces une tache lumineuse, et on relève simultanément, sur des moyens de réception optique pointés vers chaque tache lumineuse, les positions successives d'une image de chaque tache lumineuse, puis on déduit des relevés effectués la forme tridimensionnelle du bord avant et celle du bord arrière.

A cet effet, la machine comporte deux dispositifs de mesure optique comportant, d'une part, deux sources lumineuses en regard de part et d'autre de la lentille, ces sources produisant deux faisceaux lumineux dirigés respectivement vers la face avant et vers la face arrière de la lentille pour former sur chacune d'elles une tache lumineuse et, d'autre part, des moyens de réception optique pointés vers chaque tache lumineuse, lesdits moyens de calcul étant agencés pour calculer la forme tridimensionnelle de chaque bord.

Dans l'étape de relevé, on peut localiser sur le contour à former un profil dit intermédiaire se trouvant entre les bords avant et arrière, par exemple en vue de réaliser sur la tranche de la lentille un biseau à l'aplomb de ce profil intermédiaire. Les moyens de calcul sont alors agencés pour effectuer une telle sélection.

A cet effet, dans l'étape d'usinage, on emploie comme outil de meulage une meule de biseautage et on pilote le positionnement relatif de la lentille et de l'outil pour réaliser sur le contour à former de la lentille un biseau dont le sommet coïncide avec ledit profil intermédiaire.

Dans l'étape de relevé, on active par exemple chaque source lumineuse, c'est-à-dire chaque faisceau lumineux produit, alternativement pour chaque position angulaire de la lentille. On évite ainsi les interférences entre les sources lumineuses. L'unité de pilotage est alors agencée pour activer alternativement les sources lumineuses.

La ou chaque source lumineuse et, par conséquent, le ou chaque faisceau lumineux, est de préférence écarté(e) de l'axe de rotation de la lentille.

Suivant un premier mode de réalisation, le ou chaque faisceau lumineux est rectiligne, en sorte qu'il forme sur la face éclairée de la lentille une tache lumineuse sensiblement ponctuelle. La source lumineuse est agencée pour produire un tel faisceau lumineux.

La source lumineuse est, de préférence, orientée de telle manière que le faisceau lumineux est sensiblement parallèle à l'axe de rotation de la lentille.

Dans l'étape de relevé, on déduit alors, du relevé de chacune des positions successives de l'image de la tache lumineuse, les coordonnées successives de la tache lumineuse parallèlement à l'axe de rotation de la lentille.

Suivant un deuxième mode de réalisation, ledit faisceau lumineux est plan en sorte qu'il forme sur la face éclairée de la lentille une tache lumineuse linéaire. La source lumineuse est, bien entendu, agencée pour produire un tel faisceau.

De préférence, la ou chaque source lumineuse est orientée de manière que le faisceau lumineux qu'elle produit présente une bissectrice sensiblement parallèle à l'axe de rotation de la lentille.

Dans l'étape de relevé, on sélectionne alors, dans l'image de la tache lumineuse sur les moyens de réception optique, un point image du point d'intersection de tache lumineuse et du bord, on relève les positions successives de ce point sur les moyens de réception optique, et on déduit du relevé de chacune des positions successives de ce point les coordonnées successives de ce point d'intersection parallèlement à l'axe de rotation de la lentille.

Un calcul par triangulation permet de déduire les coordonnées successives de la tache lumineuse d'après le relevé des positions de son image.

Suivant un mode de réalisation, la ou chaque source lumineuse est orientée de telle manière que le faisceau lumineux et l'axe de rotation de la lentille sont sensiblement coplanaires.

Par exemple, les moyens de réception optique sont agencés pour que leur axe de pointage optique forme avec le faisceau lumineux un angle de pointage constant, non nul.

La valeur de cet angle de pointage est de préférence comprise entre 40° et 50°, elle est par exemple choisie égale à 45°.

Le faisceau lumineux étant rectiligne et formant un plan avec l'axe de rotation de la lentille, l'axe de pointage forme par exemple avec le faisceau lumineux un plan perpendiculaire au plan formé par le faisceau lumineux et l'axe de rotation de la lentille.

Lorsque le faisceau lumineux est plan et s'étend dans un plan contenant l'axe de rotation de la lentille, les moyens de réception optique sont, de préférence, agencés de manière que l'axe de pointage forme avec la bissectrice du faisceau lumineux un plan perpendiculaire au plan contenant le faisceau lumineux et l'axe de rotation de la lentille.

A des fins de précision, la ou chaque source lumineuse peut être choisie pour que le faisceau lumineux qu'elle produit soit cohérent ; il s'agit par exemple d'un laser.

Les moyens de réception optique comprennent par exemple un objectif dont l'axe optique est confondu avec l'axe de pointage ainsi qu'un écran que coupe l'axe de pointage et sur lequel se forme l'image de ladite tache lumineuse.

Cet écran peut être sensiblement perpendiculaire audit axe de pointage, mais il peut également être incliné par rapport à celui-ci suivant un angle non droit.

Par exemple, l'écran est incliné par rapport à l'axe de pointage suivant un angle dont la valeur est sensiblement égale à 45°.

D'autres caractéristiques et avantages de l'invention apparaîtront à la lumière de la description qui va suivre d'un mode de réalisation donné à titre d'exemple non limitatif, description faite en référence aux dessins annexés dans lesquels :
- la figure 1 est une vue partielle en perspective d'une machine de meulage conforme à l'invention, qui comprend un support rotatif pour le montage de la lentille, un outil de meulage rotatif, deux dispositifs de mesure formés chacun d'une source lumineuse et d'un dispositif de réception optique, disposés de part et d'autre de la lentille ;
- la figure 2 est une vue de détail en perspective de la lentille et de l'un des dispositifs de mesure de la figure 1, suivant un premier mode de réalisation où la source lumineuse produit un faisceau lumineux linéaire formant sur la face éclairée de la lentille une tache lumineuse sensiblement ponctuelle ; y est également représenté en traits interrompus le profil à relever ;
- la figure 3 est une vue de côté en coupe partielle de la lentille et du dispositif de mesure de la figure 2, suivant un plan de coupe matérialisé sur cette figure par le plan III-III ;
- la figure 4 est un schéma illustrant, en plan, l'axe d'éclairage de la source lumineuse des figures 2 et 3 ainsi que l'objectif du dispositif de réception optique et son écran, suivant un mode de réalisation où l'écran est perpendiculaire à l'axe optique de l'objectif ;
- la figure 5 est une vue analogue à la figure 4, suivant une variante de réalisation où l'écran du dispositif de réception optique forme avec l'axe optique de l'objectif un angle d'environ 45° ;
- la figure 6 est une vue schématique illustrant l'écran du dispositif de réception optique des figures précédentes, sur lequel se trouve, sous la forme d'un point, une image de la tache lumineuse formée sur la face éclairée de la lentille ;
- la figure 7 est une vue analogue à la figure 2, suivant un deuxième mode de réalisation où la source lumineuse produit un faisceau lumineux plan formant sur la face éclairée de la lentille une tache lumineuse linéaire ;
- la figure 8 est une vue en coupe de la lentille de la figure 7, suivant le plan de coupe VIII - VIII ; est également représenté, schématiquement, le dispositif de mesure optique ;
- la figure 9 est une vue schématique analogue à la figure 6, mais pour le deuxième mode de réalisation des figures 7 et 8 : aussi l'image de la tache lumineuse apparaît-elle sur l'écran sous la forme d'un trait ;

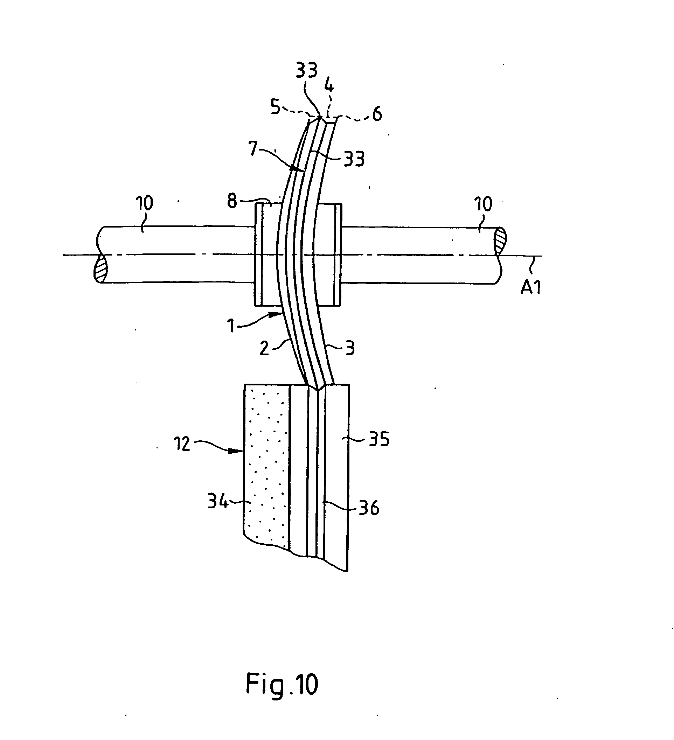

- la figure 10 est une vue de détail, de côté, illustrant la lentille de la figure 1 en cours de biseautage, suivant la direction matérialisée sur cette figure par la flèche X.

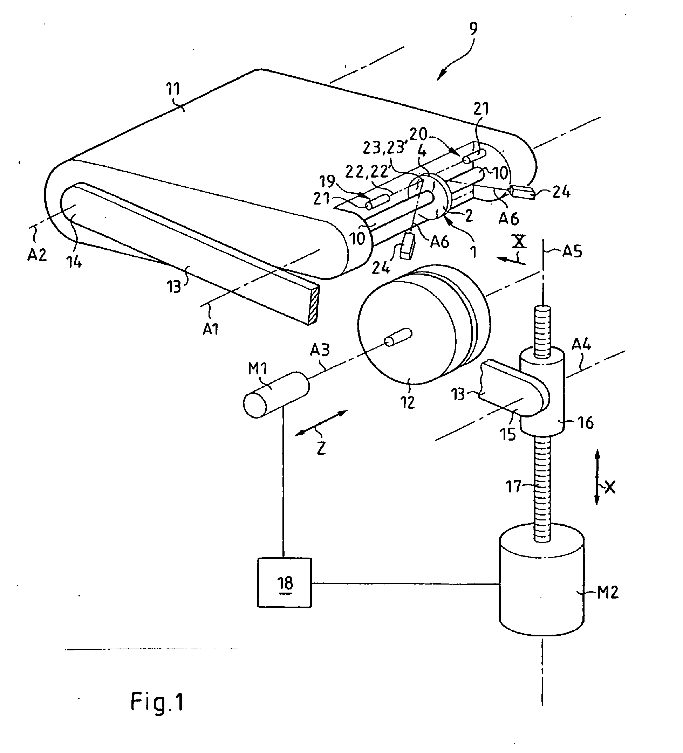

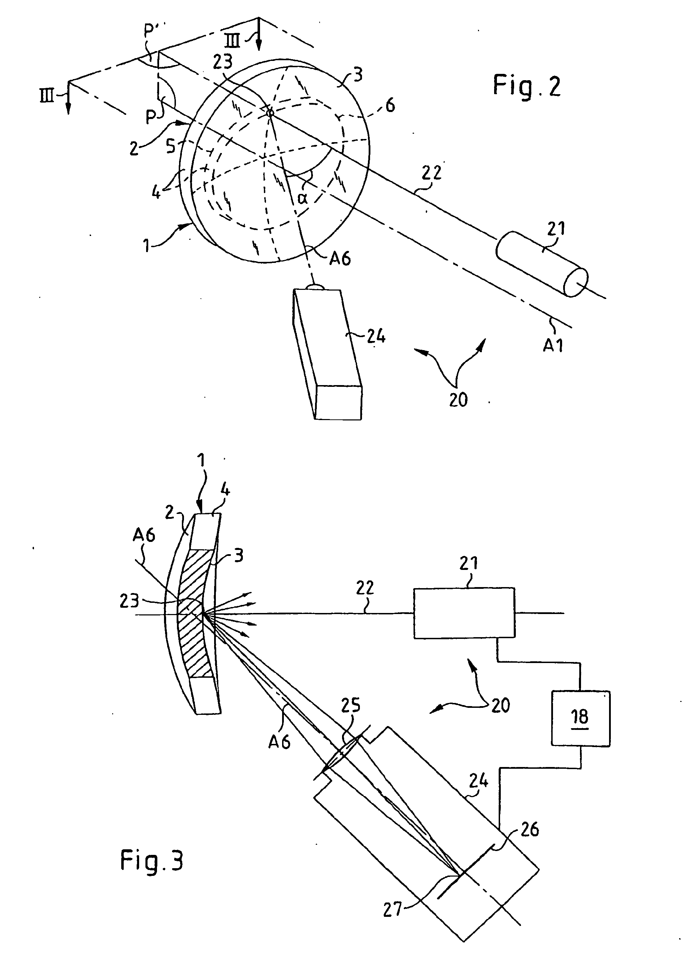

Sur les figures est représentée une lentille 1 qui présente deux surfaces optiques constituées respectivement par une face dite avant 2 et une face dite arrière 3 reliées par une tranche 4 initialement cylindrique à profil circulaire (figures 1, 2), ce qui correspond généralement à la forme sous laquelle les lentilles brutes sont livrées aux opticiens.

La lentille 1 est destinée à subir des opérations de meulage qui, par usinage de sa tranche 4, visent à adapter le contour de celle-ci au contour d'un cercle d'une monture de lunettes (non représentée).

In fine, la tranche 4 de la lentille 1, délimitée en face avant 2 par un bord dit avant 5 et en face arrière 3 par un bord dit arrière 6 (représentés en traits interrompus sur la figure 2), présentera un contour coïncidant sensiblement avec celui du cercle de monture.

Pour assurer un maintien ferme de la lentille 1, un tel cercle présente habituellement une rainure intérieure, communément appelée drageoir, à section généralement triangulaire, tandis que l'on réalisera sur la tranche 4 de la lentille 1 une nervure 7 à section transversale triangulaire, communément appelée biseau, propre à coopérer par emboîtement avec ledit drageoir.

Certains drageoirs présentent une section courbe, par exemple en arc de cercle, auquel cas l'on réalisera sur la lentille 1 une nervure à section transversale courbe de profil correspondant.

Certains cercles de monture présentent au contraire une nervure intérieure et/ou un fil, auquel cas l'on réalisera sur la tranche 4 de la lentille 1 une rainure propre à coopérer par emboîtement avec cette nervure et/ou ce fil.

Dans la suite de la description, on suppose que l'on souhaite réaliser sur la lentille 1 un biseau 7, les opérations de meulage correspondantes pouvant être aisément adaptées en vue de la réalisation d'une rainure.

Ainsi, le meulage de la lentille 1 comprend au moins deux opérations, à savoir une opération d'ébauchage, visant à conférer à la tranche 4 de la lentille 1 un contour voisin de celui du cercle de la monture, généralement avec surcote, puis une opération de finition, visant en l'occurrence à former sur la tranche 4 de la lentille 1 un biseau.

Afin de permettre un emboîtement sans difficulté de la lentille 1 dans le cercle de monture correspondant, la forme tridimensionnelle du biseau 7 devra coïncider avec la forme tridimensionnelle du drageoir, qui ne s'étend généralement pas dans un plan mais présente une certaine cambrure.

Cette forme tridimensionnelle du drageoir est relevée préalablement aux opérations de meulage de la lentille 1, au moyen d'un appareil spécifique (non représenté).

La forme tridimensionnelle du biseau 7, c'est-à-dire, en pratique, la forme tridimensionnelle de son sommet, est donc prédéterminée.

Après cette opération de relevé, il est en général prévu une opération d'orientation et de centrage de la lentille 1 visant à la positionner angulairement de manière correcte par rapport au cercle de monture tout en faisant coïncider son centre optique avec l'axe pupillaire du porteur en position de port horizontal.

Une fois cette opération de positionnement effectuée, il est posé sur la lentille 1 un bloc de préhension 8 adhésif, communément appelé "gland", l'ensemble étant alors monté dans une meuleuse 9 (décrite ci-après) avec conservation du centrage et de l'orientation de la lentille 1. Cette dernière se trouve alors dans la configuration illustrée sur la figure 1.

Ces opérations sont décrites plus en détail dans la demande de brevet français déposée par la demanderesse et publiée sous le numéro FR-A-2 742 238. L'appareil correspondant, fabriqué par la demanderesse, est d'ailleurs disponible dans le commerce.

Par ailleurs, la lentille 1 présente, au niveau de sa tranche, une certaine épaisseur, de sorte qu'elle dépasse, après son montage dans le cercle de monture, de part et d'autre de celui-ci.

Le biseau 7 à réaliser doit donc être correctement positionné entre le bord avant 5 et le bord arrière 6 afin d'assurer un positionnement correct de la lentille 1 dans son cercle.

Afin d'assurer ce positionnement correct du biseau 7, il est procédé, préalablement au meulage de la lentille 1, au relevé de la forme tridimensionnelle du bord avant 5 et du bord arrière 6 à former.

Comme on le verra par la suite, chacun de ces relevés est effectué sans contact.

Mais décrivons pour l'instant la meuleuse 9. Il s'agit d'une meuleuse automatique, par exemple à commande numérique.

Cette meuleuse 9 comporte deux arbres supports 10 en vis-à-vis, entre lesquels est maintenue par pincement la lentille 1. Ces arbres supports 10 sont entraînés conjointement en rotation autour d'un premier axe A1 commun.

Les arbres supports 10 sont montés sur un support mobile 11 monté librement pivotant sur un châssis (non représenté) de la meuleuse 9, autour d'un deuxième axe A2 parallèle au premier axe A1. Compte tenu de cette cinématique, le support 11 est appelé bascule dans la suite de la description.

La meuleuse 9 comprend en outre un outil 12 situé au droit des arbres supports 10 et entraîné en rotation autour d'un troisième axe A3 parallèle aux précédents A1, A2. Il s'agit ici d'un train de meules propres à réaliser l'ensemble des opérations d'ébauchage, de finition, de biseautage ou de rainurage. Mais il pourrait tout aussi bien s'agir d'une meule simple.

L'outil 12 est porté par un chariot (non représenté) mobile en translation, au moyen d'un moteur M1, suivant l'axe A3. Cette mobilité en translation est illustrée sur la figure 1 par la flèche double référencée Z.

Le mouvement de la bascule 11 vise à rapprocher ou éloigner les arbres supports 10 de l'outil 12, de sorte à conférer au contour de la lentille 1 la forme prédéterminée.

La meuleuse 9 comporte en outre une biellette 13 montée articulée, d'une part, par une première extrémité 14, au châssis autour du deuxième axe A2 de la bascule 11 et, d'autre part, par une deuxième extrémité 15 autour d'un quatrième axe A4 parallèle aux précédents A1, A2, A3, à une noix 16 elle-même montée mobile en translation suivant un cinquième axe A5, communément appelé axe de restitution, perpendiculaire aux premiers axes A1 à A4. La mobilité en translation de la noix 16 est illustrée sur la figure 1 par la flèche double référencée X.

La noix 16 est taraudée ; elle est en prise par vissage avec une tige filetée 17 étendue suivant le cinquième axe A5 autour duquel elle est entraînée en rotation, au moyen d'un moteur M2.

Entre la bascule 11 et la biellette 13 est interposé un capteur de contact (non représenté), par exemple de type électromagnétique, optique ou, plus simplement, électrique.

Une telle meuleuse 9, à laquelle s'applique ici l'invention, est bien connue de l'homme du métier car très répandue dans le commerce et ayant fait l'objet par la demanderesse de nombreux brevets par le passé.

L'on pourra se référer notamment à la demande de brevet français publiée sous le numéro FR-A-2 734 505.

Lorsque la lentille 1 à meuler, enserrée entre les arbres supports 10 et entraînée en rotation par ceux-ci, est amenée au contact de l'outil 12 par pivotement de la bascule 11 vers une position de travail dans laquelle les arbres supports 10 se trouvent à proximité de l'outil 12, la lentille 1 est l'objet d'un enlèvement de matière par l'outil 12 jusqu'à ce que la bascule 11 vienne en appui contre la biellette 13.

Chaque opération de meulage (ébauchage, finition) est décrétée achevée lorsque l'appui de la bascule 11 contre la biellette 13 a été détecté, par l'intermédiaire du capteur, sur un tour complet de la lentille 1 autour du premier axe A1. Le contour de la tranche 4 de la lentille 1 correspond alors, généralement avec surcote, au contour du cercle de monture auquel est destinée la lentille 1.

La meuleuse 9 comporte une unité de pilotage 18 propre à coordonner ces opérations et reliée à cet effet aux moteurs M1 et M2. C'est dans cette unité de pilotage 18 que se trouve mémorisée la forme tridimensionnelle du drageoir.

La meuleuse 9 comporte en outre, pour le relevé de la forme tridimensionnelle du bord avant 5 à former, un premier dispositif 19 de mesure optique et, pour le relevé de la forme tridimensionnelle du bord arrière 6 à former, un deuxième dispositif 20 de mesure optique.

Ces dispositifs 19, 20 sont disposés de part et d'autre de la lentille 1, chacun comprenant une source lumineuse 21, fixée au bâti de la meuleuse 9 et disposée en regard de l'une des faces 2, 3 de la lentille 1.

Cette source lumineuse 21, qui est disposée, par rapport à l'outil 12, de l'autre côté de l'arbre support 10, produit un faisceau lumineux 22 dirigé vers cette face 2, 3 de la lentille 1 pour y former une tache lumineuse 23.

La formation de cette tache 23 résulte d'un phénomène de diffusion à l'impact du faisceau 22 sur la face 2, 3, qui présente en effet une certaine rugosité.

Ce phénomène de diffusion est illustré sur la figure 3 par des flèches concentriques, qui matérialisent la lumière diffusée.

Cette source lumineuse 21 est de préférence un laser, choisi pour sa précision, le faisceau lumineux 22 produit étant alors cohérent.

Selon un premier mode de réalisation, illustré sur les figures 2 à 6, la source est choisie ou réglée pour que le faisceau lumineux 22 produit soit rectiligne, en sorte que la tache 23 formée sur la face 2, 3 éclairée de la lentille 1 est une tache sensiblement ponctuelle.

La source lumineuse 21 est disposée pour que le faisceau 22 soit à la fois écarté de l'axe de rotation A1 des arbres supports 10 et parallèle à celui-ci, de sorte qu'ils forment conjointement un plan noté P.

Chaque dispositif 19, 20 de mesure optique comprend en outre des moyens de réception optique 24, sous la forme d'une caméra munie d'un objectif 25 et d'un écran 26 photosensible.

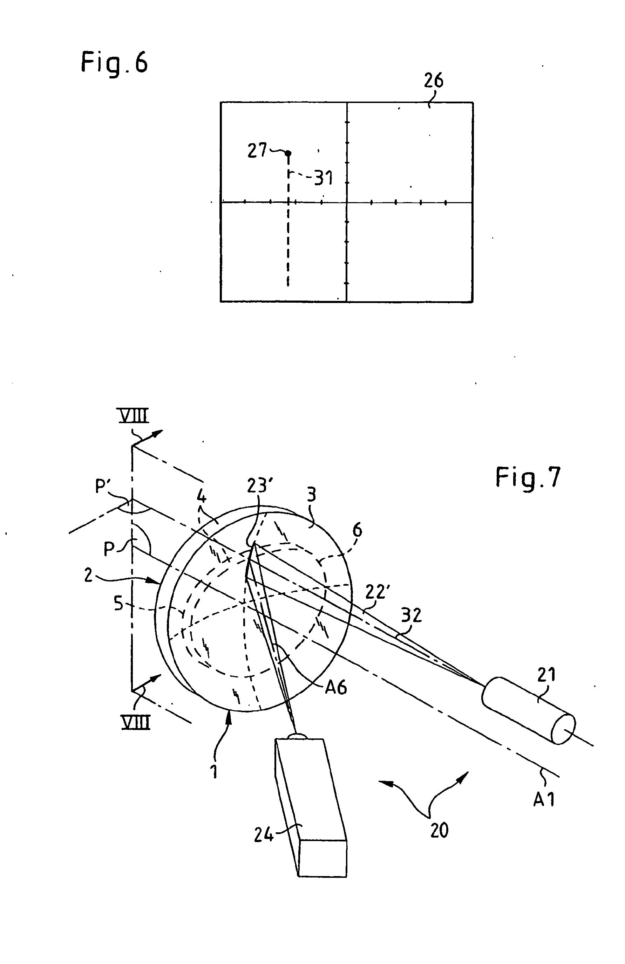

La caméra 24 est pointée vers la tache lumineuse 23. Plus précisément, cette caméra 24 présente un axe de pointage A6, confondu avec l'axe optique de son objectif 25, qui coupe le faisceau lumineux 22 au voisinage de la tache lumineuse 23, en sorte qu'il se forme une image 27 sensiblement ponctuelle de celle-ci sur l'écran 26 (figure 6).

La caméra 24 est orientée, d'une part, pour que son axe de pointage A6 forme conjointement avec le faisceau lumineux 22 un plan, noté P', perpendiculaire au plan P.

Elle est d'autre part orientée pour que son axe de pointage A6 forme avec le faisceau lumineux 22 un angle α, dit angle de pointage, constant, non nul.

La valeur de cet angle de pointage α est par exemple comprise entre 40° et 50°. De préférence, la valeur de l'angle de pointage α est sensiblement égale à 45°.

Pour relever la forme tridimensionnelle de chaque bord 5, 6 à former, on procède comme suit.

La lentille 1 est positionnée par un pivotement de la bascule 11 jusqu'à ce que la tache lumineuse 23 coïncide avec le bord 5, 6 à former, dont on connaît déjà la projection sur un plan perpendiculaire à l'axe A1 de rotation de la lentille 1, cette projection ayant été mémorisée dans l'unité de pilotage 18 lors du relevé du contour du drageoir.

La lentille 1 est alors entraînée en rotation autour de son axe A1, l'unité de pilotage 18 commandant simultanément et en continu le pivotement de la bascule 11 pour que la tache lumineuse 23 balaye la totalité du bord 5, 6 à former, en coïncidant avec lui à chaque instant.

Par ailleurs, compte tenu de la cambrure de la face 2, 3 éclairée, la tache lumineuse 23 se déplace, au cours de la rotation de la lentille 1, parallèlement à l'axe de rotation A1 de celle-ci, suivant une trajectoire 28 rectiligne comprise entre deux points extrêmes 29, 30 de rebroussement, la distance séparant ces deux points 29, 30 étant appelée profondeur de champ.

Conjointement, l'image ponctuelle 27 de la tache lumineuse 23 se déplace sur l'écran 26 en suivant elle aussi une trajectoire rectiligne 31 représentée sur la figure 6 en traits interrompus. Cette trajectoire 31 est la projection sur l'écran 26 de la trajectoire 28 suivie par la tache lumineuse 23.

Bien entendu, la taille de l'écran 26 et la distance de la lentille 1 à laquelle se trouve la caméra 24 sont choisies en fonction de la profondeur de champ pour que l'image 31 de la trajectoire de la tache lumineuse 23 ne sorte jamais de l'écran 26.

Généralement, la profondeur de champ est connue par avance, de sorte qu'il est possible d'effectuer un préréglage de l'écran 26.

Un déplacement de la tache lumineuse 23 sur une distance dz le long de sa trajectoire rectiligne 28 entraîne un déplacement proportionnel de son image 27, le long de sa propre trajectoire 31, sur une distance dl.

Les positions successives de l'image 27 de la tache 23 sur l'écran 26 sont relevées à chaque instant.

Des solutions connues permettent d'effectuer un tel relevé. Ainsi, l'écran 26 peut être constitué par un capteur optique matriciel de type CCD, les images qui s'y forment faisant alors l'objet d'un traitement numérique classique.

Ici, la longueur d'onde du faisceau 22 émis et la plage des longueurs d'ondes transmissibles par le matériau de la lentille 1 sont choisies pour être incompatibles.

Le matériau de la lentille 1 laisse passer certains rayons UV et plus généralement tout faisceau d'une longueur d'onde minimale de 325 nm. Une source lumineuse dont la longueur d'onde est plus faible que cette valeur se comportera, face à une quelconque lentille, comme si celle-ci était opaque. Une diode UV ou une diode laser UV peut, à cet effet, être avantageusement employée comme source lumineuse de manière à pouvoir supprimer d'éventuelles images secondaires du faisceau 22 se formant sur les moyens de réception optiques 24, ces images se formant en plus de l'image réfléchie directement par la première surface rencontrée de la lentille 1, celle qui est nécessaire à la mise en oeuvre de l'invention.

Ces images secondaires peuvent provenir du fait que, lorsque le faisceau 22 émis est transmissible par la lentille 1, toute l'intensité du faisceau 22 n'est pas entièrement réfléchie par la première surface rencontrée. Un faisceau résiduel peut être diffusé à l'intérieur du verre, selon un angle de réfraction, rencontrer la face opposée à la face incidente et être alors réfléchi en tant qu'image secondaire en direction des moyens de réception optique 24. D'autres images secondaires peuvent également être formées par les réflexions multiples du faisceau entre les faces du verre, le long de trajets confinés dans l'épaisseur de la lentille 1.

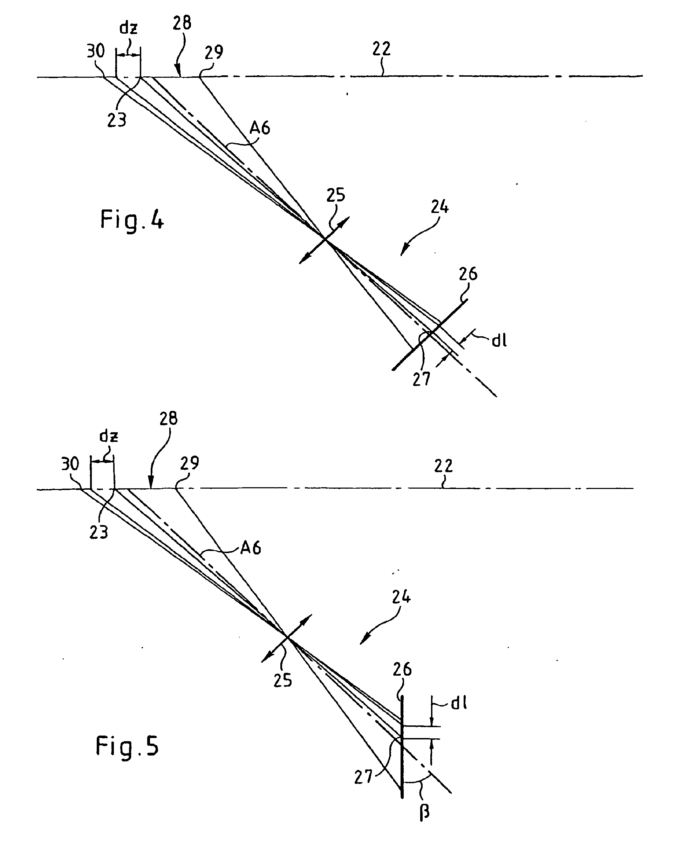

Suivant un mode de réalisation illustré sur les figures 3 et 4, l'écran 26 s'étend dans un plan perpendiculaire à l'axe de pointage A6.

En variante (figure 5), l'écran 26 s'étend dans un plan incliné par rapport à l'axe de pointage pour former avec ce dernier un angle ^{β} non droit, dont la valeur est comprise entre 40° et 50°, de préférence égale ou sensiblement égale à 45°.

Un simple calcul de triangulation permet de déduire de la position de son image 27 la position ou coordonnée de la tache 23 le long de sa trajectoire 28.

Les résultats sont mémorisés, pour chaque position angulaire de la lentille 1, dans l'unité de pilotage 18, en sorte qu'à la suite d'une révolution complète de la lentille 1, il est stocké dans l'unité de pilotage 18 un ensemble de données formant une modélisation numérique de la forme tridimensionnelle du bord 5, 6 à former.

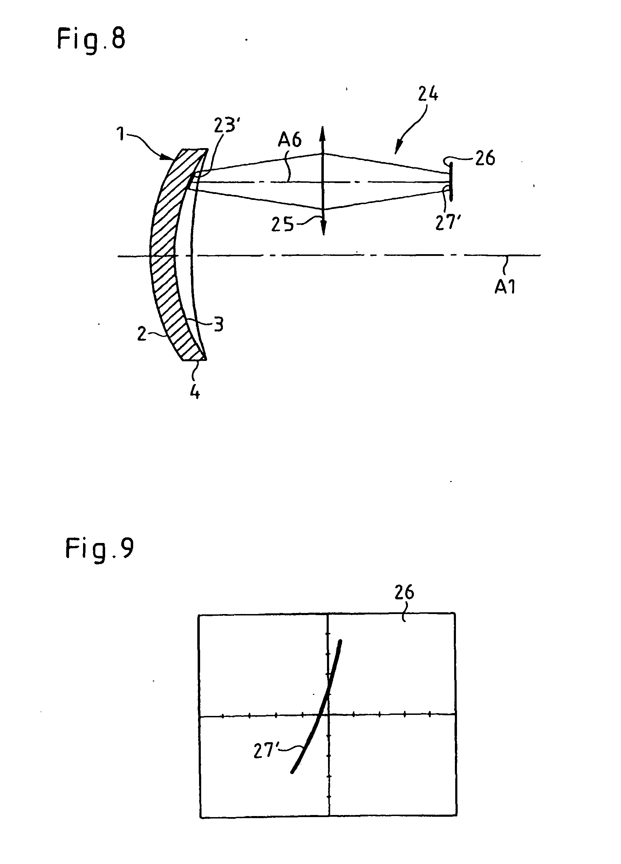

Selon un deuxième mode de réalisation, illustré sur les figures 7 à 9, la source 21 est choisie ou réglée pour que le faisceau lumineux 22' produit soit plan, en sorte que la tache 23' formée sur la face éclairée 2, 3 de la lentille 1 est une tache sensiblement linéaire.

Le montage du dispositif de mesure optique 19, 20 est le même que celui précédemment décrit pour le premier mode de réalisation, l'emploi de la bissectrice 32 du faisceau lumineux 22' se substituant, pour l'orientation de la caméra 24, au faisceau lumineux rectiligne 22 du premier mode de réalisation.

Ainsi, la source lumineuse 21 étant écartée de l'axe de rotation A1 des arbres supports 10, elle est disposée et réglée de telle sorte que, d'une part, le plan P dans lequel s'étend le faisceau lumineux 22' contienne cet axe de rotation A1 et, d'autre part, de telle sorte que la bissectrice 32 du faisceau 22' soit sensiblement parallèle à ce même axe de rotation A1.

L'axe de pointage A6 forme avec la bissectrice 32 du faisceau lumineux 22' un plan P' perpendiculaire au plan P formé par celui-ci, la valeur de l'angle de pointage α étant la même que précédemment.

En pratique, pour obtenir une telle disposition, il suffit de reprendre le montage du premier mode de réalisation décrit ci-dessus, et d'adjoindre à la source lumineuse 21 une lentille d'étalement pour former un faisceau lumineux 22' plan.

Ainsi, la caméra 24 est orientée pour que son axe de pointage A6 coupe le faisceau lumineux 22' sur sa bissectrice 32, l'image 27' de la tache lumineuse 23' sur l'écran 26 étant alors une ligne courbe du fait de la concavité (ou de la convexité) de la face 2, 3 éclairée.

Pour relever la forme tridimensionnelle du bord 5, 6 à former, on procède, pour la partie mécanique, de la même manière que précédemment décrit pour le premier mode de réalisation, seul le traitement de l'image 27' étant diffèrent. Les moyens de calcul de l'unité de pilotage 18 sont adaptés en conséquence.

Ainsi, la lentille 1 est positionnée par un pivotement de la bascule 11 jusqu'à ce que la bissectrice 32 du faisceau lumineux 22' coïncide avec le bord 5, 6 à former de la face 2, 3 éclairée, ce dernier étant ainsi sensiblement centré sur la tache lumineuse 23'.

La lentille 1 est entraînée en rotation autour de son axe A1, l'unité de pilotage 18 commandant simultanément et en continu le pivotement de la bascule 11 pour que la tache lumineuse 23' balaye la totalité du bord 5, 6 à former, la bissectrice 32 du faisceau lumineux 22' coïncidant à chaque instant avec le bord 5, 6 à former.

Au cours de la rotation de la lentille 1, la tache lumineuse 23' se déplace parallèlement à l'axe de rotation A1 de celle-ci suivant une trajectoire comprise entre deux lignes extrêmes de rebroussement, tandis que son image 27' se déplace conjointement sur l'écran 26.

Il est effectué à chaque instant un relevé de la position sur l'écran 26 de chaque point de cette image 27'.

Un simple calcul de moyenne permet de sélectionner un point intermédiaire de l'image 27', qui correspond à l'intersection de la tache 23' avec le bord 5, 6 à former, dont on déduit par triangulation la position ou coordonnée le long de sa trajectoire, c'est-à-dire parallèlement à l'axe de rotation A1 de la lentille 1.

Le traitement des données est alors le même que précédemment, et l'on dispose in fine d'une modélisation numérique de la forme tridimensionnelle du bord 5, 6 à former.

Par contre, cette deuxième méthode est, au moins en théorie, plus précise que la première.

En effet, lorsque des impuretés se trouvent sur le trajet du faisceau lumineux rectiligne 22, l'image 27 qui se forme sur l'écran 26 ne correspond plus à un point du bord 5, 6 à former, ce qui peut conduire à une erreur de relevé, quoique cette erreur soit ponctuelle.

Dans l'emploi d'un faisceau lumineux plan 22', la présence d'impuretés sur le trajet du faisceau 22' provoque l'apparition de discontinuités dans l'image 27', mais il est possible de restituer une image continue au moyen d'un simple calcul d'interpolation.

Suivant un mode de réalisation illustré sur la figure 1, les dispositifs de mesure optique 19, 20 sont disposés symétriquement par rapport à la lentille 1, de sorte que leurs sources lumineuses 21 sont situées en regard l'une de l'autre, les faisceaux 22, 22' qu'ils produisent étant respectivement, coaxiaux (pour le premier mode de réalisation) ou coplanaires (pour le deuxième mode de réalisation).

Pour obtenir un relevé du bord avant 5 et du bord arrière 6, l'on peut procéder de deux manières différentes au moins.

Il est possible d'effectuer une première révolution complète de la lentille 1, lors de laquelle on active l'une des sources 21 pour relever la forme tridimensionnelle du bord 5 correspondant à former, puis une deuxième révolution complète lors de laquelle on active l'autre source lumineuse 21 pour relever l'autre bord 6 à former.

En variante, il est possible d'effectuer une unique révolution complète de la lentille 1, lors de laquelle, pour chaque position angulaire de celle-ci, on active alternativement chacune des deux sources lumineuses 21 pour relever simultanément les deux bords 5, 6 à former sans que la source lumineuse 21 du premier dispositif de mesure 19 ne vienne brouiller, par un phénomène de réfraction, les relevés effectués par le deuxième dispositif 20, et réciproquement.

Concrètement, ces activations alternées se traduisent par des clignotements en opposition de phase des deux sources lumineuses 21.

L'on dispose in fine d'une modélisation numérique de la forme tridimensionnelle du bord avant 5 et du bord arrière 6 à former, ainsi que de leur localisation parallèlement à l'axe de rotation A1 de la lentille 1.

On connaît donc à l'avance l'épaisseur de la lentille 1 au droit des bords 5, 6 à former, et l'on peut donc choisir la localisation, entre le bord avant 5 et le bord arrière 6, d'un profil dit intermédiaire 33 prédéterminé correspondant au sommet du biseau 7 à former.

Comme on l'a expliqué précédemment, le meulage de la lentille 1 comporte une première étape d'ébauchage au cours de laquelle la lentille 1 est usinée, sa tranche 4 faisant l'objet d'un enlèvement de matière jusqu'à ce qu'elle présente le contour souhaité prédéterminé, les bords avant 5 et arrière 6 mentionnés ci-dessus étant ainsi formés.

Cette étape d'ébauchage peut être effectuée au moyen d'une meule d'ébauchage 34 du train de meules 12 .

Le meulage comporte ensuite une deuxième étape de finition, en l'occurrence de biseautage, au cours de laquelle on usine sur la tranche 4 de la lentille 1 un biseau 7 suivant la forme et la localisation prédéterminées comme décrit ci-dessus.

Cette étape peut être réalisée au moyen d'une meule de finition 35 du train de meules 12, adjacente à la meule d'ébauchage 34, et dans laquelle est pratiquée une rainure 36 dont la section présente un profil en forme de V.

Pour chaque position angulaire de la lentille 1, l'unité de pilotage 18 commande, en fonction des relevés effectués, le positionnement relatif de l'outil 12 et de la lentille 1 suivant une direction parallèle à l'axe de rotation A1 de la lentille 1, pour que le fond de la rainure 36 se trouve systématiquement au droit du profil intermédiaire 33 mémorisé dans l'unité de pilotage 18.

Les mesures optiques décrites ci-dessus présentent une précision supérieure aux mesures mécaniques classiques, au bénéfice de la précision de meulage.

L'invention a été décrite pour la réalisation d'un biseau 7 en V sur la tranche 4 de la lentille 1. Toutefois, il est évident qu'il est possible de réaliser de manière identique une rainure au lieu d'un biseau.

Il suffit pour cela d'employer une meule de rainurage présentant une nervure périphérique.

De même, l'invention peut être mise en oeuvre pour chanfreiner les bords de la lentille, en fonction des relevés tridimensionnels effectués.

Lorsqu'il n'est nécessaire de chanfreiner que l'un des bords de la tranche de la lentille, l'on peut se contenter de relever la forme tridimensionnelle de ce seul bord, de la manière décrite précédemment. Il suffit alors d'employer ou d'activer un seul des dispositifs de mesure optique.

## Revendications

1. Procédé pour meuler par sa tranche (4) une lentille (1) ophtalmique présentant une face dite avant (2) et une face dite arrière (3) opposées, suivant un contour prédéterminé correspondant à celui d'un cercle de monture de lunettes dans lequel la lentille (1) est destinée à être montée, ledit contour étant délimité en face avant (2) par un bord dit avant (5) et en face arrière (3) par un bord dit arrière (6), procédé comportant une étape de relevé suivant laquelle on relève la forme tridimensionnelle d'au moins l'un des bords avant (5) ou arrière (6), **caractérisé en ce que**, dans l'étape de relevé, on balaye sur la face éclairée (2, 3) de la lentille (1) ledit bord (5, 6) au moyen d'un faisceau lumineux (22, 22') formant sur ladite face (2, 3) une tache lumineuse (23, 23'), on relève simultanément, sur des moyens de réception optique (24) pointés vers ladite tache lumineuse (23, 23'), les positions successives d'une image (27, 27') de ladite tache lumineuse (23, 23'), et on déduit des relevés effectués la forme tridimensionnelle dudit bord (5, 6), et **en ce qu'**il comporte en outre une étape d'usinage suivant laquelle on amène la lentille (1), entraînée en rotation, en contact par sa tranche (4) avec un outil (12) de meulage, et on pilote le positionnement relatif de la lentille (1) et de l'outil (12) en fonction du ou desdits relevés.

2. Procédé selon la revendication 1, **caractérisé en ce que**, dans l'étape de relevé, on relève la forme tridimensionnelle du bord avant (5) et celle du bord arrière (6), on balaye chaque bord (5, 6) au moyen de deux faisceaux lumineux (22, 22') formant respectivement sur chacune des faces (2, 3) une tache lumineuse (23, 23'), on relève simultanément, sur des moyens de réception optique (24) pointés vers chaque tache lumineuse (23, 23'), les positions successives d'une image (27, 27') de chaque tache lumineuse (23, 23') et on déduit des relevés effectués la forme tridimensionnelle du bord avant (5) et celle du bord arrière (6).

3. Procédé selon la revendication 2, **caractérisé en ce que**, dans l'étape de relevé, on localise sur le contour à former un profil (33) dit intermédiaire se trouvant entre les bords avant (5) et arrière (6).

4. Procédé selon la revendication 3, **caractérisé en ce que**, dans l'étape d'usinage, on emploie une meule (35) de biseautage et on pilote le positionnement relatif de la lentille (1) et de l'outil (12) pour réaliser sur le contour à former de la lentille (1) un biseau (7) dont le sommet coïncide avec ledit profil intermédiaire (33).

5. Procédé selon l'une des revendications 2 à 4, **caractérisé en ce que,** dans l'étape de relevé, on active chaque faisceau lumineux (22, 22') alternativement pour chaque position angulaire de la lentille (1).

6. Procédé selon l'une des revendications précédentes, **caractérisé en ce que** le ou chaque faisceau lumineux (22, 22') est écarté de l'axe de rotation (A1) de la lentille (1).

7. Procédé selon la revendication 6, **caractérisé en ce que** le ou chaque faisceau lumineux (22) est rectiligne, en sorte qu'il forme sur la face éclairée (2, 3) de la lentille (1) une tache lumineuse (23) sensiblement ponctuelle.

8. Procédé selon la revendication 7, **caractérisé en ce que** ledit faisceau lumineux (22) est sensiblement parallèle à l'axe de rotation (A1) de la lentille (1).

9. Procédé selon la revendication 7 ou 8, **caractérisé en ce que**, dans l'étape de relevé, on déduit du relevé de chacune des positions successives de l'image (27) de la tache lumineuse (23), les coordonnées successives de la tache lumineuse (23) parallèlement à l'axe de rotation (A1) de la lentille (1).

10. Procédé selon la revendication 6, **caractérisé en ce que** ledit faisceau lumineux (22') est plan en sorte qu'il forme sur la face éclairée (2, 3) de la lentille (1) une tache lumineuse (23') linéaire.

11. Procédé selon la revendication 10, **caractérisé en ce que** ledit faisceau lumineux (22') présente une bissectrice (32) sensiblement parallèle à l'axe de rotation (A1) de la lentille (1).

12. Procédé selon la revendication 10 ou 11, **caractérisé en ce que**, dans l'étape de relevé, on sélectionne, dans l'image (27') de la tache lumineuse (23') sur les moyens de réception optique (24), un point image du point d'intersection de la tache lumineuse (23') et du bord (5, 6), on relève les positions successives de ce point sur les moyens de réception optique (24), et on déduit du relevé de chacune des positions successives de ce point les coordonnées successives dudit point d'intersection parallèlement à l'axe de rotation (A1) de la lentille (1).

13. Procédé selon la revendication 9 ou 12, **caractérisé en ce que** ladite déduction est effectuée au moyen d'un calcul par triangulation.

14. Procédé selon l'une des revendications précédentes, **caractérisé en ce que** le faisceau lumineux (22, 22') et l'axe de rotation (A1) de la lentille (1) sont sensiblement coplanaires.

15. Procédé selon l'une des revendications précédentes, **caractérisé en ce que** les moyens de réception optique (24) présentent un axe de pointage (A6) optique formant avec le faisceau lumineux (22, 22') un angle de pointage (α) constant, non nul.

16. Procédé selon la revendication 15, **caractérisé en ce que** la valeur de l'angle de pointage (α) est comprise entre 40° et 50°.

17. Procédé selon la revendication 16, **caractérisé en ce que** la valeur de l'angle de pointage (α) est sensiblement égale à 45°.

18. Procédé selon l'une des revendications 15 à 17, **caractérisé en ce que,** le faisceau lumineux (22) étant rectiligne et formant un plan (P) avec l'axe de rotation (A1) de la lentille (1), l'axe de pointage (A6) forme avec le faisceau lumineux (22) un plan (P') perpendiculaire au plan (P) formé par le faisceau lumineux (22) et l'axe de rotation (A1) de la lentille (1).

19. Procédé selon l'une des revendications 15 à 17, **caractérisé en ce que,** le faisceau lumineux (22') étant plan et s'étendant dans un plan (P) contenant l'axe de rotation (A1) de la lentille (1), l'axe de pointage (A6) forme avec la bissectrice (32) du faisceau lumineux (22') un plan (P') perpendiculaire au plan (P) contenant le faisceau lumineux (22') et l'axe de rotation (A1) de la lentille (1).

20. Procédé selon l'une des revendications précédentes, **caractérisé en ce que** ledit faisceau lumineux (22, 22') est cohérent.

21. Procédé selon la revendication 20, **caractérisé en ce que** ledit faisceau lumineux (22, 22') est un laser.

22. Procédé selon l'une des revendications 1 à 21, **caractérisé en ce que** la longueur d'onde du faisceau lumineux (22, 22') a une valeur située en dehors de la plage des longueurs d'ondes transmissibles par la lentille ophtalmique (1).

23. Procédé selon l'une des revendications 1 à 22, **caractérisé en ce que** la longueur d'onde du faisceau lumineux (22, 22') a une valeur inférieure à 325 nm.

24. Procédé selon la revendication 22 ou 23, **caractérisé en ce que** le faisceau lumineux (22, 22') est issu d'une diode UV.

25. Machine pour meuler par sa tranche (4) une lentille (1) ophtalmique présentant une face dite avant (2) et une face dite arrière (3) opposées, suivant un contour prédéterminé correspondant à celui d'un cercle de monture de lunettes dans lequel la lentille (1) est destinée à être montée, ce contour à former étant délimité en face avant (2) par un bord dit avant (5) et en face arrière (3) par un bord dit arrière (6), la machine (9) comportant un support rotatif (10) pour le montage de la lentille (1), un outil de meulage (12) rotatif, des moyens (M1) pour déplacer l'un par rapport à l'autre le support (10) et l'outil (12) suivant une direction parallèle à l'axe de rotation (A1) du support (10), des moyens pour déplacer le support (10) et l'outil (12) l'un par rapport à l'autre suivant une direction perpendiculaire à l'axe (A1) du support (10), une unité de pilotage (18) adaptée à commander lesdits moyens de déplacement (M1, M2), **caractérisée en ce qu'**elle comporte au moins un dispositif de mesure optique (19, 20) comprenant une source lumineuse (21) produisant un faisceau lumineux (22, 22') dirigé vers l'une des faces (2, 3) de la lentille (1) pour y former une tache lumineuse (23, 23'), des moyens de réception optique (24) pointés vers ladite tache lumineuse (23, 23') et reliés à ladite unité de pilotage (18), celle-ci comportant des moyens de calcul adaptés à calculer la forme tridimensionnelle de l'un au moins des bords (5, 6) en fonction des relevés effectués sur les moyens de réception optique (24).

26. Machine suivant la revendication 25, **caractérisée en ce qu**'elle comporte deux dispositifs de mesure optique (19, 20) comportant deux sources lumineuses (21) en regard de part et d'autre de la lentille (1), ces sources produisant deux faisceaux lumineux (22, 22') dirigés respectivement vers la face avant (2) et vers la face arrière (3) de la lentille (1) pour former sur chacune d'elles une tache lumineuse (23, 23'), des moyens de réception optique (24) pointés vers chaque tache lumineuse (23, 23'), lesdits moyens de calcul étant agencés pour calculer la forme tridimensionnelle de chaque bord (5, 6).

27. Machine selon la revendication 26, **caractérisée en ce que** les moyens de calcul sont agencés pour localiser sur le contour à former un profil intermédiaire (33) se trouvant entre le bord avant (5) et le bord arrière (6).

28. Machine selon la revendication 27, **caractérisée en ce que** l'outil de meulage (12) comporte une meule de biseautage (35).

29. Machine selon l'une des revendications 26 à 28, **caractérisée en ce que** l'unité de pilotage (18) est agencée pour activer alternativement les sources lumineuses (21).

30. Machine selon l'une des revendications 25 à 29, **caractérisée en ce que** la ou chaque source lumineuse (21) est écartée de l'axe de rotation (A1) du support (10).

31. Machine selon la revendication 30, **caractérisée en ce que** la ou chaque source lumineuse (21) est agencée pour produire un faisceau lumineux (22) rectiligne.

32. Machine selon la revendication 31, **caractérisée en ce que** la ou chaque source lumineuse (21) est orientée pour que le faisceau lumineux (22) qu'elle produit soit sensiblement parallèle à l'axe de rotation (A1) du support (10).

33. Machine selon la revendication 30, **caractérisée en ce que** la ou chaque source lumineuse (21) est agencée pour produire un faisceau lumineux (22') plan.

34. Machine selon la revendication 33, **caractérisée en ce que** la ou chaque source lumineuse (21) est agencée pour que la bissectrice (32) du faisceau lumineux (22') soit sensiblement parallèle à l'axe de rotation (A1) du support (10).

35. Machine selon l'une des revendications 25 à 34, **caractérisée en ce que** la ou chaque source lumineuse (21) est agencée pour que le faisceau lumineux (22, 22') qu'elle produit et l'axe de rotation (A1) du support (10) soient sensiblement coplanaires.

36. Machine selon l'une des revendications 25 à 35, **caractérisée en ce que** les moyens de réception optique (24) sont agencés pour que leur axe de pointage (A6) forme avec le faisceau lumineux (22, 22') un angle de pointage (α) constant, non nul.

37. Machine selon la revendication 36, **caractérisée en ce que** les moyens de réception optique (24) sont agencés pour que la valeur de l'angle de pointage (α) soit comprise entre 40° et 50°.

38. Machine selon la revendication 37, **caractérisée en ce que** les moyens de réception optique (24) sont agencés pour que la valeur de l'angle de pointage (α) soit sensiblement égale à 45°.

39. Machine selon l'une des revendications 36 à 38, **caractérisée en ce que** les moyens de réception optique (24) sont agencés pour que leur axe de pointage (A6) se trouve dans un plan (P') comprenant l'axe du faisceau lumineux et perpendiculaire au plan (P) formé par le faisceau lumineux (22, 22') et l'axe de rotation (A1) du support (10).

40. Machine selon l'une des revendications 25 à 39, **caractérisée en ce que** les moyens de réception optique (24) comprennent un objectif (25) dont l'axe optique est confondu avec l'axe de pointage (A6) ainsi qu'un écran (26) que coupe l'axe de pointage (A6) et sur lequel se forme l'image (27, 27') de ladite tache lumineuse (23, 23').

41. Machine selon la revendication 40, **caractérisée en ce que** ledit écran (26) est sensiblement perpendiculaire audit axe de pointage (A6).

42. Machine selon la revendication 40, **caractérisée en ce que** ledit écran (26) est incliné par rapport audit axe de pointage (A6), suivant un angle (β) non droit.

43. Machine selon la revendication 42, **caractérisée en ce que** ledit écran est incliné par rapport à l'axe de pointage (A6) suivant un angle (β) dont la valeur est sensiblement égale à 45°.

44. Machine selon l'une des revendications 25 à 43, **caractérisée en ce que** ladite source lumineuse (21) est agencée pour produire un faisceau lumineux (22, 22') cohérent.

45. Machine selon la revendication 43, **caractérisée en ce que** ladite source lumineuse (21) est un laser.

46. Machine selon l'une des revendications 25 à 45, **caractérisée en ce que** la longueur d'onde du faisceau lumineux (22, 22') a une valeur située en dehors de la plage des longueurs d'ondes transmissibles par la lentille ophtalmique (1).

47. Machine selon l'une des revendications 25 à 46, **caractérisée en ce que** la longueur d'onde du faisceau lumineux (22, 22') a une valeur inférieure à 325 nm.

48. Machine selon la revendication 46 ou 47, **caractérisée en ce que** la source lumineuse (22, 22') est une diode UV.

## Claims

1. Process for grinding the rim (4) of an ophthalmic lens (1) having a front face (2) and a rear face (3) opposite one another, following a predetermined contour corresponding to that of the ring of a spectacle frame in which the lens (1) is intended to be mounted, said contour being delimited on the front face (2) by a front edge (5) and on the rear face (3) by a rear edge (6), with the process comprising a plotting stage in which the three-dimensional shape of at least one of the front (5) or rear (6) edges is plotted, **characterized in that**, in the plotting stage, said edge (5, 6) is scanned on the illuminated face (2, 3) of the lens (1) using a light beam (22, 22') forming a light spot (23, 23') on said face (2, 3), the successive positions of an image (27, 27') of said light spot (23, 23') are plotted simultaneously, on optical reception means (24) pointing towards said light spot (23, 23'), and the three-dimensional shape of said edge (5, 6) is deduced from the plots carried out, and **in that** it comprises in addition a machining stage according to which the lens (1), while it is rotated, is brought into contact by its rim (4) with a grinding tool (12), and the relative positions of the lens (1) and the tool (12) are controlled according to the plot or plots.

2. Process according to claim 1, **characterized in that**, in the plotting stage, the three-dimensional shape of the front edge (5) and that of the rear edge (6) are plotted, each edge (5, 6) is scanned using two light beams (22, 22') forming a light spot (23, 23') respectively on each of the faces (2, 3), the successive positions of an image (27, 27') of each light spot (23, 23') are plotted simultaneously, on optical reception means (24) pointing towards each light spot (23, 23'), and the three-dimensional shape of the front edge (5) and that of the rear edge (6) are deduced from the plots made.

3. Process according to claim 2, **characterized in that**, in the plotting stage, a so-called intermediate profile (33) between the front edge (5) and the rear edge (6) is located on the contour to be formed.

4. Process according to claim 3, **characterized in that**, in the machining stage, a bevelling grinding wheel (35) is employed, and the relative positions of lens (1) and tool (12) are controlled so that a bevel (7), the peak of which is coincident with said intermediate profile (33), is made on the contour to be formed of the lens (1).

5. Process according to one of claims 2 to 4, **characterized in that** in the plotting stage, each light beam (22, 22') is activated alternately for each angular position of the lens (1).

6. Process according to one of the preceding claims, **characterized in that** the or both light beams (22, 22') are separated from the rotational axis (A1) of the lens (1).

7. Process according to claim 6, **characterized in that** the or each light beams (22) is rectilinear, so that it forms an approximately point-sized light spot (23) on the illuminated face (2, 3) of the lens (1).

8. Process according to claim 7, **characterized in that** said light beam (22) is approximately parallel to the rotational axis (A1) of the lens (1).

9. Process according to claim 7 or 8, **characterized in that**, in the plotting stage, the successive coordinates of the light spot (23) parallel to the rotational axis (A1) of lens (1) are deduced from the plot of each of the successive positions of the image (27) of the light spot (23).

10. Process according to claim 6, **characterized in that** said light beam (22') is flat, so that it forms a linear light spot (23') on the illuminated face (2, 3) of the lens (1).

11. Process according to claim 10, **characterized in that** said light beam (22') presents a bisector (32) approximately parallel to the rotational axis (A1) of the lens (1).

12. Process according to claim 10 or 11, **characterized in that**, in the plotting stage, an image point of the point of intersection of the light spot (23') and of the edge (5, 6) is selected in the image (27') of the light spot (23') on the optical reception means (24), the successive positions of this point are plotted on the optical reception means (24), and the successive coordinates of said point of intersection parallel to the rotational axis (A1) of the lens (1) are deduced from the plot of each of the successive positions of this image point.

13. Process according to claim 9 or 12, **characterized in that** said deduction is carried out using a calculation by triangulation.

14. Process according to one of the preceding claims, **characterized in that** the light beam (22, 22') and the rotational axis (A1) of the lens (1) are approximately coplanar.

15. Process according to one of the preceding claims, **characterized in that** the optical reception means (24) have an optical sight axis (A6) forming with the light beam (22, 22'), a constant sight angle (α), which is not zero.

16. Process according to claim 15, **characterized in that** the value of the sight angle (α) is between 40° and 50°.

17. Process according to claim 16, **characterized in that** the value of the sight angle (α) is approximately equal to 45°.

18. Process according to one of claims 15 to 17, **characterized in that**, as the light beam (22) is rectilinear and forms a plane (P) with the rotational axis (A1) of the lens (1), the sight axis (A6) forms, with the light beam (22), a plane (P') perpendicular to the plane (P) formed by the light beam (22) and the rotational axis (A1) of the lens (1).

19. Process according to one of claims 15 to 17, **characterized in that**, as the light beam (22') is flat and extends in a plane (P) containing the rotational axis (A1) of the lens (1), the sight axis (A6) forms, with the bisector (32) of the light beam (22'), a plane (P') perpendicular to the plane (P) containing the light beam (22') and the rotational axis (A1) of the lens (1).

20. Process according to one of the preceding claims, **characterized in that** said light beam (22, 22') is coherent.

21. Process according to claim 20, **characterized in that** said light beam (22, 22') is a laser.

22. Process according to one of claims 1 to 21, **characterized in that** the wavelength of the light beam (22, 22') has a value that is outside of the range of wavelengths transmissible by the ophthalmic lens (1).

23. Process according to one of claims 1 to 22, **characterized in that** the wavelength of the light beam (22, 22') has a value below 325 nm.

24. Process according to claim 22 or 23, **characterized in that** the light beam (22, 22') originates from a UV diode.

25. Machine for grinding the rim (4) of an ophthalmic lens (1) having a so-called front face (2) and a so-called rear face (3) opposite one another, following a predetermined contour corresponding to that of the ring of a spectacle frame in which the lens (1) is intended to be mounted, this contour to be formed being delimited on the front face (2) by a front edge (5) and on the rear face (3) by a rear edge (6), the machine (9) comprising a rotating support (10) for mounting the lens (1), a rotary grinding tool (12), means (M1) for moving the support (10) and the tool (12) with respect to each other in a direction parallel to the rotational axis (A1) of support (10), means for moving support (10) and the tool (12) with respect to each other in a direction perpendicular to the axis (A1) of support (10), a control unit (18) suitable for controlling said means of displacement (M1, M2), **characterized in that** it includes at least one optical measurement device (19, 20) containing a light source (21) producing a light beam (22, 22') directed towards one of the faces (2, 3) of the lens (1) in order to form there a light spot (23, 23'), optical reception means (24) pointed towards said light spot (23, 23') and connected to said control unit (18), the latter including means of calculation suitable for calculating the three-dimensional shape of at least one of the edges (5, 6) according to the plots produced on the optical reception means (24).

26. Machine according to claim 25, **characterized in that** it includes two optical measurement devices (19, 20) containing two opposite-facing light sources (21) arranged on either side of the lens (1), these sources producing two light beams (22, 22') directed respectively towards the front face (2) and towards the rear face (3) of the lens (1) in order to form a light spot (23, 23'), on each of them, optical reception means (24) pointed towards each light spot (23, 23'), said means of calculation being set up to calculate the three-dimensional shape of each edge (5, 6).

27. Machine according to claim 26, **characterized in that** the means of calculation are set up for locating, on the contour to be formed, an intermediate profile (33) between the front edge (5) and the rear edge (6).

28. Machine according to claim 27, **characterized in that** the grinding tool (12) has a bevelling grinding wheel (35).

29. Machine according to one of claims 26 to 28, **characterized in that** the control unit (18) is set up to activate the light sources (21) alternately.

30. Machine according to one of claims 25 to 29, **characterized in that** the or each light sources (21) is separated from the rotational axis (A1) of the support (10).

31. Machine according to claim 30, **characterized in that** the or each light sources (21) is set up for producing a rectilinear light beam (22).

32. Machine according to claim 31, **characterized in that** the or each light sources (21) is oriented so that the light beam (22) that it produces is approximately parallel to the rotational axis (A1) of the support (10).

33. Machine according to claim 30, **characterized in that** the or each light sources (21) is set up for producing a flat light beam (22').

34. Machine according to claim 33, **characterized in that** the or each light sources (21) is set up so that the bisector (32) of the light beam (22') is approximately parallel to the rotational axis (A1) of the support (10).

35. Machine according to one of claims 25 to 34, **characterized in that** the or each light sources (21) is set up in order that the light beam (22, 22') that it produces and the rotational axis (A1) of the support (10') are approximately coplanar.

36. Machine according to one of claims 25 to 35, **characterized in that** the optical reception means (24) are set up in order that their sight axis (A6) forms with the light beam (22, 22') a constant sight angle (α), which is not zero.

37. Machine according to claim 36, **characterized in that** the optical reception means (24) are set up in order that the value of the sight angle (α) is between 40° and 50°.

38. Machine according to claim 37, **characterized in that** the optical reception means (24) are set up in order that the value of the sight angle (α) is approximately equal to 45°.

39. Machine according to one of claims 36 to 38, **characterized in that** the optical reception means (24) are set up so that their sight axis (A6) is situated in a plane (P') containing the axis of the light beam and perpendicular to the plane (P) formed by the light beam (22, 22') and the rotational axis (A1) of support (10).

40. Machine according to one of claims 25 to 39, **characterized in that** the optical reception means (24) include an objective lens (25) the optical axis of which is coincident with the sight axis (A6) as well as a screen (26) that is cut by the sight axis (A6) and on which the image (27, 27') of said light spot (23, 23') forms.

41. Machine according to claim 40, **characterized in that** the said screen (26) is approximately perpendicular to said sight axis (A6).

42. Machine according to claim 40, **characterized in that** the said screen (26) is inclined relative to the said sight axis (A6), by an angle (β) that is not a right-angle.

43. Machine according to claim 42, **characterized in that** the said screen is inclined relative to the sight axis (A6) by an angle (β) whose value is approximately equal to 45°.

44. Machine according to one of claims 25 to 43, **characterized in that** the said light source (21) is set up to produce a coherent light beam (22, 22').

45. Machine according to claim 43, **characterized in that** the said light source (21) is a laser.

46. Machine according to one of claims 25 to 45, **characterized in that** the wavelength of the light beam (22, 22') has a value situated outside the range of the wavelengths that can be transmitted by the ophthalmic lens (1).

47. Machine according to one of claims 25 to 46, **characterized in that** the wavelength of the light beam (22, 22') has a value of less than 325 nm.

48. Machine according to claim 46 or 47, **characterized in that** the light source (22, 22') is a UV diode.

## Patentansprüche

1. Verfahren zum Schleifen einer ophthalmischen Linse (1) bezüglich ihres Randes (4), welche eine so genannte Vorderseite (2) und dazu gegenüberliegend eine so genannte Rückseite (3) aufweist, entlang einer vorbestimmten Kontur, welche der eines Kreises eines Brillengestells entspricht, in welchem die Linse bestimmungsgemäß montiert werden soll, wobei die Kontur an der Vorderseite (2) von einem so genannten vorderen Rand (5) und an der Rückseite (3) von einem so genannten hinteren Rand (6) begrenzt ist, wobei das Verfahren einen Schritt des Messens, bei welchem die dreidimensionale Form von zumindest einem des vorderen (5) oder des hinteren Randes (6) gemessen wird, **dadurch gekennzeichnet, dass** bei dem Schritt des Messens auf die beleuchtete Seite (2, 3) der Linse (1) der Rand (5, 6) mittels eines Lichtbündels (22, 22'), einen Licht-Spot (23, 23') auf der Seite (2, 3) ausbildend abgetastet wird, gleichzeitig an einer optischen Aufnahmeeinrichtung (24), welche auf den Licht-Spot (23, 23') gerichtet ist, die aufeinander folgenden Positionen eines Bildes (27, 27') des Licht-Spots (23, 23') gemessen werden, und aus den durchgeführten Messungen die dreidimensionale Form des Randes (5, 6) hergeleitet wird, und **dadurch**, dass es zudem einen Schritt der Bearbeitung umfasst, demnach die in Rotation versetzte Linse (1) mit ihrem Rand (4) in Kontakt mit einem Schleifwerkzeug (12) gebracht wird, und die relative Positionierung der Linse (1) und des Werkzeuges (12) in Abhängigkeit der Messung(en) gesteuert wird.

2. Verfahren gemäß Anspruch 1, **dadurch gekennzeichnet, dass** bei dem Schritt des Messens die dreidimensionale Form des vorderen Randes (5) und die des hinteren Randes (6) gemessen wird, jeder Rand (5, 6) mittels zweier Lichtbündel (22, 22'), jeweils an jeder der Seiten (2, 3) einen Licht-Spot ausbildend, abgetastet wird, gleichzeitig an (einer) optischen Aufnahmeeinrichtung(en) (24), welche auf jeden Licht-Spot (23, 23') gerichtet sind, die aufeinander folgenden Positionen eines Bildes (27, 27') von jedem Licht-Spot (23, 23') gemessen werden und aus den durchgeführten Messungen die dreidimensionale Form des vorderen Randes (5) und die des hinteren Randes (6) hergeleitet wird.

3. Verfahren gemäß Anspruch 2, **dadurch gekennzeichnet, dass** bei dem Schritt des Schleifens, an der zu formenden Kontur ein so genanntes Zwischen-Profil (33) lokalisiert wird, welches sich zwischen dem vorderen Rand (5) und dem hinteren Rand (6) befindet.

4. Verfahren gemäß Anspruch 3, **dadurch gekennzeichnet, dass** bei dem Schritt des Bearbeitens ein Fasen-Schleifer (35) verwendet wird und die relative Positionierung der Linse (1) und des Werkzeugs (12) gesteuert wird, um an der zu formenden Kontur der Linse (1) eine Fase (7) auszubilden, deren Spitze mit dem Zwischenprofil (33) zusammenfällt.

5. Verfahren gemäß einem der Ansprüche 2 bis 4, **dadurch gekennzeichnet, dass** bei dem Schritt des Messens jedes Lichtbündel (22, 22') wechselweise für jede Winkelposition der Linse (1) aktiviert wird.

6. Verfahren gemäß einem der vorangehenden Ansprüche, **dadurch gekennzeichnet, dass** das oder jedes Lichtbündel (22, 22') von der Rotationsachse (A1) der Linse (1) beabstandet ist.

7. Verfahren gemäß Anspruch 6, **dadurch gekennzeichnet, dass** das oder jedes Lichtbündel (22) geradlinig ist, so dass es an der beleuchteten Fläche (2, 3) der Linse (1) einen im Wesentlichen punktförmigen Licht-Spot (23) ausbildet.

8. Verfahren gemäß Anspruch 7, **dadurch gekennzeichnet, dass** das Lichtbündel (22) im Wesentlichen parallel zur Rotationsachse (A1) der Linse (1) ist.

9. Verfahren gemäß Anspruch 7 oder 8, **dadurch gekennzeichnet, dass** bei dem Schritt des Messens aus der Messung jeder der aufeinander folgenden Positionen des Bildes (27) des Licht-Spots (23) die aufeinander folgenden Koordinaten des Licht-Spots (23) parallel zu der Rotationsachse (A1) der Linse (1) hergeleitet werden.

10. Verfahren gemäß Anspruch 6, **dadurch gekennzeichnet, dass** das Lichtbündel (22') eben ist, so dass es auf der beleuchteten Seite (2, 3) der Linse (1) einen linearen Licht-Spot (23') ausbildet.

11. Verfahren gemäß Anspruch 10, **dadurch gekennzeichnet, dass** das Lichtbündel (22') eine Winkelhalbierende (32) im Wesentlichen parallel zu der Rotationsachse (A1) der Linse (1) aufweist.

12. Verfahren gemäß Anspruch 10 oder 11, **dadurch gekennzeichnet, dass** bei dem Schritt des Messens in dem Bild (27') des Licht-Spots (23') an der optische Aufnahmeeinrichtung (24) ein Bildpunkt des Schnittpunktes des Licht-Spots (23') und des Randes (5, 6) gewählt wird, die diesem Punkt folgenden Positionen an der optischen Aufnahmeeinrichtung (24) gemessen werden, und aus der Messung von jedem der diesem Punkt folgenden Positionen die dem Schnittpunkt folgenden Koordinaten parallel zur Rotationssachse (A1) der Linse (1) hergeleitet werden.

13. Verfahren gemäß Anspruch 9 oder 12, **dadurch gekennzeichnet, dass** die Herleitung mittels Triangulationsrechnung erfolgt.

14. Verfahren gemäß einem der vorangehenden Ansprüche, **dadurch gekennzeichnet, dass** das Lichtbündel (22, 22') und die Rotationsachse (A1) der Linse (1) im Wesentlichen koplanar sind.

15. Verfahren gemäß einem der vorangehenden Ansprüche, **dadurch gekennzeichnet, dass** das die optischen Aufnahmeeinrichtung(en) (24) eine optische Ausrichtungsachse (A6) aufweist, welche mit dem Strahlenbündel (22, 22') einen konstanten Ausrichtungswinkel (α) ungleich Null ausbildet.

16. Verfahren gemäß Anspruch 15, **dadurch gekennzeichnet, dass** der Wert des Ausrichtungswinkels (α) zwischen 40° und 50° ist.

17. Verfahren gemäß Anspruch 16, **dadurch gekennzeichnet, dass** der Wert des Ausrichtungswinkels (α) im Wesentlichen gleich 45° ist.

18. Verfahren gemäß einem der Ansprüche 15 bis 17, **dadurch gekennzeichnet, dass**, wobei das Lichtbündel (22) geradlinig ist und eine Ebene (P) mit der Rotationsachse (A1) der Linse (1) bildet, die Ausrichtungsachse (A6) mit dem Lichtbündel (22) eine Ebene (P') senkrecht zu der Ebene (P), gebildet durch das Lichtbündel (22) und die Rotationsachse (A1) der Linse (1), bildet.

19. Verfahren gemäß einem der Ansprüche 15 bis 17, **dadurch gekennzeichnet, dass**, wobei das Lichtbündel (22') eben ist und sich in einer Ebene (P) erstreckt, welche die Rotationsachse (A1) der Linse (1) umfasst, die Ausrichtungsachse (A6) mit der Winkelhalbierenden (32) des Lichtbündels (22') eine Ebene (P') senkrecht zu der Ebene (P), umfassend das Lichtbündel (22') und die Rotationsachse (A1) der Linse (1), bildet.

20. Verfahren gemäß einem der vorangehenden Ansprüche, **dadurch gekennzeichnet, dass** das Lichtbündel (22, 22') kohärent ist.

21. Verfahren gemäß Anspruch 20, **dadurch gekennzeichnet, dass** das Lichtbündel (22, 22') ein Laser ist.

22. Verfahren gemäß einem der Ansprüche 1 bis 21, **dadurch gekennzeichnet, dass** die Wellenlänge des Lichtbündels (22, 22') einen Wert hat, angeordnet außerhalb des Bereichs der von der ophthalmischen Linse (1) übertragbaren Wellenlängen.

23. Verfahren gemäß einem der Ansprüche 1 bis 21, **dadurch gekennzeichnet, dass** die Wellenlänge des Lichtbündels (22, 22') einen Wert geringer als 325 nm hat.

24. Verfahren gemäß Anspruch 22 oder 23, **dadurch gekennzeichnet, dass** das Lichtbündel (22, 22') von einer UV-Diode abgegeben ist.

25. Vorrichtung zum Schleifen einer ophthalmischen Linse (1) bezüglich ihres Randes (4), welche eine so genannte Vorderseite (2) und dazu gegenüberliegend eine so genannte Rückseite (3) aufweist, entlang einer vorbestimmten Kontur, welche der eines Kreises eines Brillengestells entspricht, in welchem die Linse bestimmungsgemäß montiert werden soll, wobei die zu bildende Kontur an der Vorderseite (2) von einem so genannten vorderen Rand (5) und an der Rückseite (3) von einem so genannten hinteren Rand (6) begrenzt ist, wobei die Vorrichtung (9) eine Dreh-Halterung (10) zur Montage der Linse (1), ein Dreh-Schleifwerkzeug (12), eine Einrichtung (M1) um die Halterung (10) und das Werkzeug (12) zueinander entlang einer Richtung parallel zu der Rotationsachse (A1) der Halterung (10) zu versetzen, eine Einrichtung um die Halterung (10) und das Werkzeug (12) zueinander entlang einer Richtung senkrecht zur Achse (A1) der Halterung (10) zu versetzen, eine Steuereinheit (18), dazu ausgelegt die Einrichtungen (M1, M2) zu steuern, **dadurch gekennzeichnet, dass** sie umfasst, zumindest eine optische Messeinrichtung (19, 20), umfassend eine Lichtquelle (21), welche ein Lichtbündel (22, 22') ausbildet, ausgerichtet hin zu einer der Flächen (2, 3) der Linse (1) um dort einen Licht-Spot (23, 23') zu bilden, eine optische Aufnahmeeinrichtung (24), ausgerichtet hin zu dem Licht-Spot (23, 23') und verbunden mit der Steuereinheit (18), welche eine Recheneinrichtung umfasst, die dazu geeignet ist die dreidimensionale Form von zumindest einem der Ränder (5, 6) in Abhängigkeit der an der optischen Aufnahmeeinrichtung (24) durchgeführten Messung zu berechnen.

26. Vorrichtung gemäß Anspruch 25, **dadurch gekennzeichnet, dass** sie zwei optische Messeinrichtungen (19, 20) umfasst, welche zwei Lichtquellen (21), jeweils beidseitig der Linse (1) gegenüberliegend, umfassen, wobei diese Quellen zwei Lichtbündel (22, 22') erzeugen, welche jeweils auf die Vorderseite (2) und die Rückseite (3) der Linse (1) gerichtet sind, um auf jeder einen Licht-Spot (23, 23') zu bilden, eine optische Aufnahmeeinrichtung (24) auf jeden Licht-Spot (23, 23') gerichtet, wobei die Recheneinrichtung dazu ausgelegt ist die dreidimensionale Form jedes Randes (5, 6) zu berechnen.

27. Vorrichtung gemäß Anspruch 26, **dadurch gekennzeichnet, dass** die Recheneinrichtung dazu ausgelegt ist, auf der zu bildenden Kontur ein Zwischenprofil (33) zu lokalisieren, welches sich zwischen dem vorderen Rand (5) und dem hinteren Rand (6) befindet.

28. Vorrichtung gemäß Anspruch 27, **dadurch gekennzeichnet, dass** das Schleifwerkzeug (12) einen Fasen-Schleifer (35) umfasst.

29. Vorrichtung gemäß einem der Ansprüche 26 bis 28, **dadurch gekennzeichnet, dass** die Steuereinrichtung (18) dazu ausgelegt ist wechselweise die Lichtquellen (21) zu aktivieren.

30. Vorrichtung gemäß einem der Ansprüche 25 bis 29, **dadurch gekennzeichnet, dass** die oder jede Lichtquelle (21) von der Rotationsachse (A1) der Halterung (10) beabstandet ist.

31. Vorrichtung gemäß Anspruch 30, **dadurch gekennzeichnet, dass** die oder jede Lichtquelle (21) dazu ausgelegt ist ein geradliniges Lichtbündel (22) zu erzeugen.

32. Vorrichtung gemäß Anspruch 31, **dadurch gekennzeichnet, dass** die oder jede Lichtquelle (21) so ausgerichtet ist, dass das Lichtbündel (22), welches sie erzeugt, im Wesentlichen parallel zur Rotationsachse (A1) der Halterung (10) ist.

33. Vorrichtung gemäß Anspruch 30, **dadurch gekennzeichnet, dass** die oder jede Lichtquelle (21) dazu ausgelegt ist, ein ebenes Lichtbündel (22') zu erzeugen.

34. Vorrichtung gemäß Anspruch 33, **dadurch gekennzeichnet, dass** die oder jede Lichtquelle (21) so ausgelegt ist, dass die Winkelhalbierende (32) des Lichtbündels (22') im Wesentlichen parallel zur Rotationsachse (A1) der Halterung (10) ist.

35. Vorrichtung gemäß einem der Ansprüche 25 bis 34, **dadurch gekennzeichnet, dass** die oder jede Lichtquelle (21) so ausgelegt ist, dass das Lichtbündel (22, 22'), welches sie erzeugt, und die Rotationsachse (A1) der Halterung (10) im Wesentlichen koplanar sind.

36. Vorrichtung gemäß einem der Ansprüche 25 bis 35, **dadurch gekennzeichnet, dass** die optische Aufnahmeeinrichtung (24) so ausgelegt ist, dass ihre Ausrichtungsachse (A6) mit dem Lichtbündel (22, 22') einen konstanten Ausrichtungswinkel (α) ungleich Null ausbildet.

37. Vorrichtung gemäß Anspruch 36, **dadurch gekennzeichnet, dass** die optische Aufnahmeeinrichtung (24) so ausgelegt ist, dass der Wert des Ausrichtungswinkels (α) zwischen 40° und 50° ist.

38. Vorrichtung gemäß Anspruch 37, **dadurch gekennzeichnet, dass** die optische Aufnahmeeinrichtung (24) so ausgelegt ist, dass der Wert des Ausrichtungswinkels (α) im Wesentlichen gleich 45° ist.

39. Vorrichtung gemäß einem der Ansprüche 36 bis 38, **dadurch gekennzeichnet, dass** die optische Aufnahmeeinrichtung (24) so ausgelegt ist, dass sich ihre Ausrichtungsachse (A6) in einer Ebene (P'), welche die Achse des Strahlenbündels umfasst, und senkrecht zur Ebene (P), gebildet aus dem Lichtbündel (22, 22') und der Rotationsachse (A1) der Halterung (10), befindet.

40. Vorrichtung gemäß einem der Ansprüche 25 bis 39, **dadurch gekennzeichnet, dass** die optische Aufnahmeeinrichtung (24) ein Objektiv (25), dessen optische Achse mit der Ausrichtungsachse (A6) überlagert ist, sowie einen Schirm (26) umfasst, welcher die Ausrichtungsachse (A6) schneidet und an welchem sich das Bild (27, 27') der Licht-Spots (23, 23') ausbildet.

41. Vorrichtung gemäß Anspruch 40, **dadurch gekennzeichnet, dass** der Schirm (26) im Wesentlichen senkrecht zu der Ausrichtungsachse (A6) ist.

42. Vorrichtung gemäß Anspruch 40, **dadurch gekennzeichnet, dass** der Schirm (26) bezüglich der Ausrichtungsachse (A6) entsprechend einem nicht geraden Winkel (β) geneigt ist.

43. Vorrichtung gemäß Anspruch 42, **dadurch gekennzeichnet, dass** der Schirm bezüglich der Ausrichtungsachse (A6) entsprechend einem Winkel (β) geneigt ist, dessen Wert im Wesentlichen gleich 45° ist.

44. Vorrichtung gemäß einem der Ansprüche 25 bis 43, **dadurch gekennzeichnet, dass** die Lichtquelle (21) dazu ausgelegt ist, ein kohärentes Lichtbündel (22, 22') zu erzeugen.

45. Vorrichtung gemäß Anspruch 44, **dadurch gekennzeichnet, dass** die Lichtquelle (21) ein Laser ist.

46. Vorrichtung gemäß einem der Ansprüche 25 bis 45, **dadurch gekennzeichnet, dass** die Wellenlänge des Lichtbündels (22, 22') einen Wert hat, angeordnet außerhalb des Bereichs der von der ophthalmischen Linse (1) übertragbaren Wellenlängen.

47. Vorrichtung gemäß einem der Ansprüche 25 bis 46, **dadurch gekennzeichnet, dass** die Wellenlänge des Lichtbündels (22, 22') einen Wert geringer als 325 nm hat.

48. Vorrichtung gemäß einem der Ansprüche 25 bis 47, **dadurch gekennzeichnet, dass** die Lichtquelle (21, 22, 22') eine UV-Diode ist.
